# EUROPEAN PATENT SPECIFICATION

(11) **EP 2 805 550 B1**
(45) Date of publication and mention of the grant of the patent: **07.08.2019**
(21) Application number: 12705870.9
(22) Date of filing: 27.02.2012
(51) Int. Cl.: H04W 52/02

(54) **METHOD FOR CONTROLLING NETWORK ENERGY SAVING IN A WIRELESS COMMUNICATION SYSTEM**
VERFAHREN ZUR STEUERUNG DER NETZWERKENERGIEEINSPARUNG IN EINEM DRAHTLOSEN KOMMUNIKATIONSSYSTEM
PROCÉDÉ DE RÉGULATION D'ÉCONOMIE D'ÉNERGIE D'UN RÉSEAU DANS UN SYSTÈME DE COMMUNICATION SANS FIL

(43) Date of publication of application: 26.11.2014
(73) Proprietor: Huawei Technologies Co., Ltd., Longgang District Shenzhen, Guangdong 518129 (CN)
(72) Inventor: OLOFSSON, Henrik, S-16440 Kista (SE); LEGG, Peter, S-16440 Kista (SE); EDLER, Tomas, S-16440 Kista (SE)
(74) Representative: Pfenning, Meinig & Partner mbB
(86) International application number: PCT/EP2012/053238
(87) International publication number: WO 2013/127422

(56) References cited:
- WO-A1-2007/111391
- WO-A1-2009/107916
- WO-A1-2009/127276
- WO-A1-2011/096860

## Description

### Technical Field

The present invention relates to a method in a wireless communication system for controlling network energy saving. Furthermore, the invention also relates to a method in a mobile station, a method in a network control node, a mobile station device, a network control device, a computer program, and a computer program product thereof.

### Background of the Invention

Network energy saving is one of the key requirements in future wireless communication network systems. A typical need is to meet expected Quality of Service (QoS) levels of data delivery whilst minimising energy consumption of the radio communication network. Energy may be saved by a number of different techniques, including different sleep modes in which BTS hardware is deactivated and by switching off a cell completely.

A step towards this energy saving involves switching off a radio cell in which there are no active mobile users. When there is only a single layer of cells (a layer means cells of one Radio Access Technology (RAT)) on one frequency, when a cell is switched off this typically introduces a radio coverage hole into the network. When a User Equipment (UE) is switched on within a coverage hole the UE is unable to connect to the network.

This problem can be circumvented by deploying a network with more than one layer, and ensuring that at every geographical location there is at least one layer providing coverage. For example, a network could comprise a GSM layer at 900 MHz and a LTE layer at 2600 MHz. If the GSM layer provides universal coverage it is safe to switch off LTE cells; if a UE connects to GSM in a location with no LTE coverage the management system can determine to re-energise an LTE cell to provide service to the UE.

Drawbacks of this approach are the complexity of the interaction between separate RATs and the delay incurred by this approach. The delay is large because before the UE can connect to the switched off LTE cell, the LTE cell must first be switched on and then the UE must undertake an inter-RAT handover (in the example it would be from GSM to LTE), in addition to any delays in the signalling and decision taking in the two different RATs.

The reason for switching on the LTE cell can be due to a lack of capacity in the GSM cell or due to a lack of support for a certain QoS level in the GSM cell that can be supported in the LTE cell. The latter reason may be very important for a mobile operator, since the operators often differentiate the pricing between usage of different access technologies. End users paying for LTE access may not be satisfied with using a QoS level supported by the legacy GSM network.

Apart for completely switching off specific cells, other example solutions for reducing energy consumption in the network are:
- Disable MIMO (reduced peak rates);
- Base station sector switching (base station is the radio access node that directly communicates with the mobile station, e.g. eNodeB, eNB, NodeB, or NB);
- Multi-hop transmission;
- eNB DTX on multiple timeslots (configure as MBSFN);
- Reduced output power of eNB;
- Configure long DRX for the UE;
- Adjust packet scheduling, e.g. by scheduling data at high rate for short periods or even dropping packets to force an adaptive codec to step down to decrease the data rate;
- Avoid configuring any additional measurements (e.g. inter-RAT) thereby increasing the risk for reduced mobility and increased risk for call drop.
Also for these listed cases, there is an impact to perceived QoS for the end user.

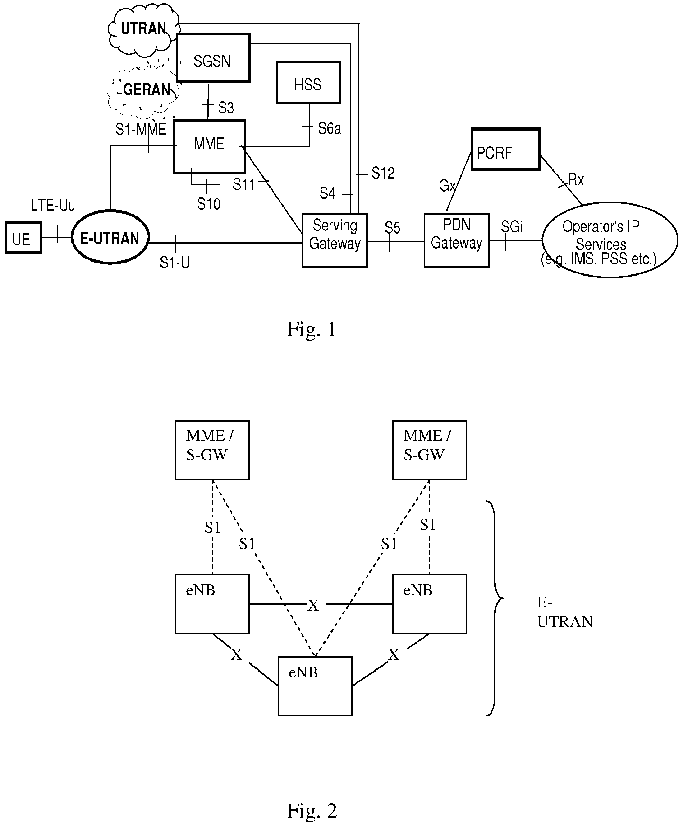

The architecture of the evolved packet core network is presented in Fig.1 and the architecture of EUTRAN (also seen in this figure) is presented more in detail in Fig. 1.

In 3GPP, the possibility to switch off certain cells for energy saving purposes exists in LTE. This is enabled by the following mechanism over the X2 interface: autonomous switch off decision in each eNB; sending a switch on request to a neighbour eNB; notification of current energy saving status to neighbour eNB; and load information exchange between eNBs.

A similar solution is also discussed for inter-RAT (LTE-GERAN/UTRAN), but in this case the RIM interface is used. At the moment, load information exchange is already supported for RIM.

WO 2011/096860 A1 relates to an user equipment and a radio base station and to related methods of enabling the radio base station to effect an energy saving in the system during a connection between the user equipment and the radio based station according to a priority level of the energy saving.

WO 2007/111391 A1 describes a method for providing an idle mode service using an idle mode service server system interlocking with a contents provider server and at least one mobile communication terminal. In the method, state information is received from the at least one mobile communication terminal, and a push message is transmitted to the at least one mobile communication terminal in consideration of the sate information upon receiving a push message transmission request from the contents provider server. Thereafter, contents are transmitted to the at least one mobile communication terminal according to the push message transmission. Accordingly, it is possible to provide an idle mode service that can be used without the connection to a contents server by a user. Also, specific contents can be provided with or without the request and consent of a user. Consequently, the system and method according to the present invention can control an idle-screen application through a combination between interworking systems.

In addition to the above, possible enhancements are discussed such as: enhanced switch on mechanism, by using either a probing mode where the eNB enters a state where the eNB only transmits but do not receive anything, or a sniffing mode where the eNB only receives but do not transmits anything; and solutions for compensating the switched off cells by extending the coverage of neighbour cells within the same RAT and the same frequency.

### Summary of the Invention

An object of the present invention is to provide a solution which mitigates or solves the drawbacks and problems of prior art solutions.

Another object of the invention is to provide a solution which increases energy saving in the communication network.

A method in a mobile station for transmitting information is provided according to the independent claim. More specifically, according to a first aspect of the invention, the above mentioned objects are achieved by a method in a wireless communication system for controlling network energy saving, said wireless communication system comprising at least one communication network, at least one network control node and one or more mobile stations, said method comprising the steps of:
- transmitting, by a mobile station, at least one network energy saving information to at least one network control node, wherein said at least one network energy saving information indicates a preferred or an accepted network energy saving mode by said mobile station;
- receiving, by said at least one network control node, said at least one network energy saving information; and
- controlling, by said at least one network control node, network energy saving in said at least one communication network by using said at least one network energy saving information. According to a second aspect of the invention, the above mentioned objects are achieved by a method in a mobile station for transmitting information, said mobile station being arranged for communication in a wireless communication system comprising at least one communication network, at least one network control node and one or more mobile stations, said method comprising the step of:
- transmitting at least one network energy saving information to said at least one network control node, wherein said at least one network energy saving information indicates a preferred or an accepted network energy saving mode for said mobile station.

According to a third aspect of the invention, the above mentioned objects are achieved by a method in a network control node for controlling network energy saving in a wireless communication system, said network control node being arranged for controlling network energy saving in a wireless communication system comprising at least one communication network, at least one network control node and one or more mobile stations, said method comprising the steps of:
- receiving at least one network energy saving information according to any of the preceding claims from a mobile station; and
- controlling network energy saving in said at least one communication network based on said at least one network energy saving information.

Embodiments of the above methods are disclosed in the appended dependent claims.

The present invention also relates to a computer program and a computer program product.

According to a fourth aspect of the invention, the above mentioned objects are achieved by a mobile station device arranged for communication in a wireless communication system comprising at least one communication network, at least one network control node device and one or more mobile station devices, further being arranged to:
- transmit at least one network energy saving information to said at least one network control node, wherein said at least one network energy saving information indicates a preferred or an accepted network energy saving mode for said mobile station device.

According to a fifth aspect of the invention, the above mentioned objects are achieved by a network control node device arranged for controlling network energy saving in a wireless communication system comprising at least one communication network, at least one network control node device and one or more mobile station devices, further being arranged to:
- receive at least one network energy saving information from a mobile station device above; and
- control network energy saving in said at least one communication network based on said at least one network energy saving information.

The present invention provides a solution by which mobile stations can actively contribute to network energy saving in wireless communication networks. More especially, end users of mobile stations can be involved in network energy saving decisions of the communication network.

Therefore, it is assumed that the present invention will create understanding/goodwill for network energy saving among the end users. This will increase the will to actively help to save energy in the network and thereby increase the popularity of energy saving among end user subscribers. Accordingly, with the present invention it will be possible by the mobile stations to impact network energy saving by indicating preferred or accepted network energy saving modes for the mobile stations to suitable network control nodes of the network.

Further applications and advantages of the invention will be apparent from the following detailed description.

### Brief Description of the Drawings

The appended drawings are intended to clarify and explain different embodiments of the present invention in which:
- Fig. 1 illustrates the evolved packet core architecture;
- Fig. 2 illustrates the EUTRAN architecture;
- Fig. 3 illustrates user plane signalling to a web server, through a OAM;
- Fig. 4 illustrates user plane signalling to a generic server, thereafter directly to the core network;
- Fig. 5 illustrates control plane signalling to a core network node; and
- Fig. 6 illustrates control plane signalling to a base station.

### Detailed Description of the Invention

To achieve the aforementioned and other objects, the present invention relates to a method in a mobile station and to a corresponding method in a network control node. Mentioned two methods together form a method in a wireless communication system which comprises the steps of: transmitting, by a mobile station, at least one network energy saving information to at least one network control node, wherein the at least one network energy saving information indicates a preferred or an accepted network energy saving mode by the mobile station; receiving, by the at least one network control node, the at least one network energy saving information; and controlling, by the at least one network control node, network energy saving in the at least one communication network by using the at least one network energy saving information.

The network energy saving information comprises information which indicates a preferred or an accepted network energy saving mode for a mobile station, such as a UE. The mobile station can therefore actively impact network energy saving in the communication network of the wireless communication system. Thereby, energy can be saved in the network.

The network energy saving information may be transmitted in the control plane and/or in the user plane of the communication system.

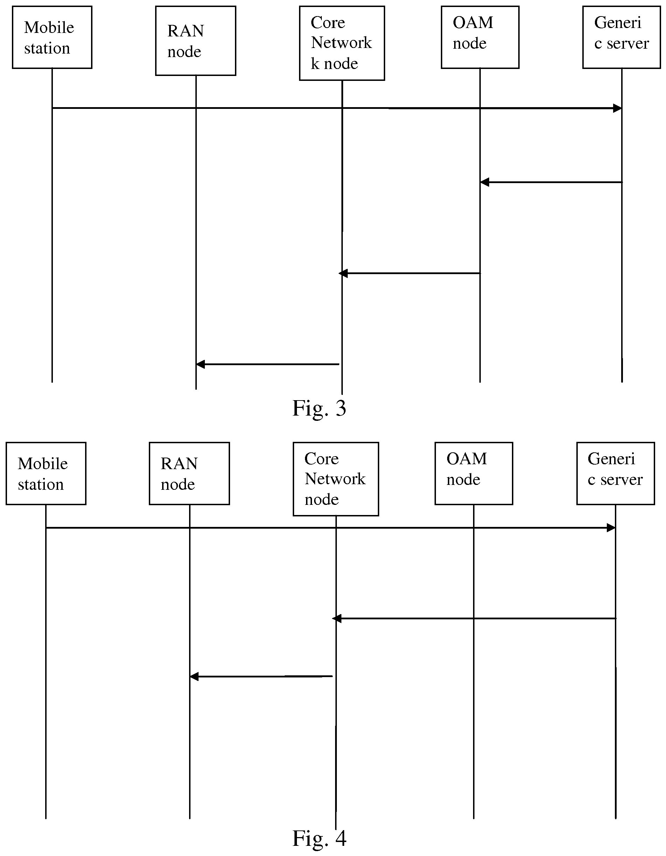

Figure 3 and 4 illustrates the propagation of the network energy saving information by using the user plane. The general idea according to this embodiment is that the network energy saving information is transmitted to the network control node via the user plane. Preferably, the information is propagated to the network control node via a server, e.g. a web server. Thereby, the end user may e.g. use an application (e.g. a so called App for smart phones issued by the mobile operator) for indicating energy saving to the network. The advantage of using this embodiment is that any generic server may be used, without the need for any standardisation on how the energy saving information shall be formatted in the transmission between the mobile station and the network control node, which enables different networks to employ fully customised network saving solutions.

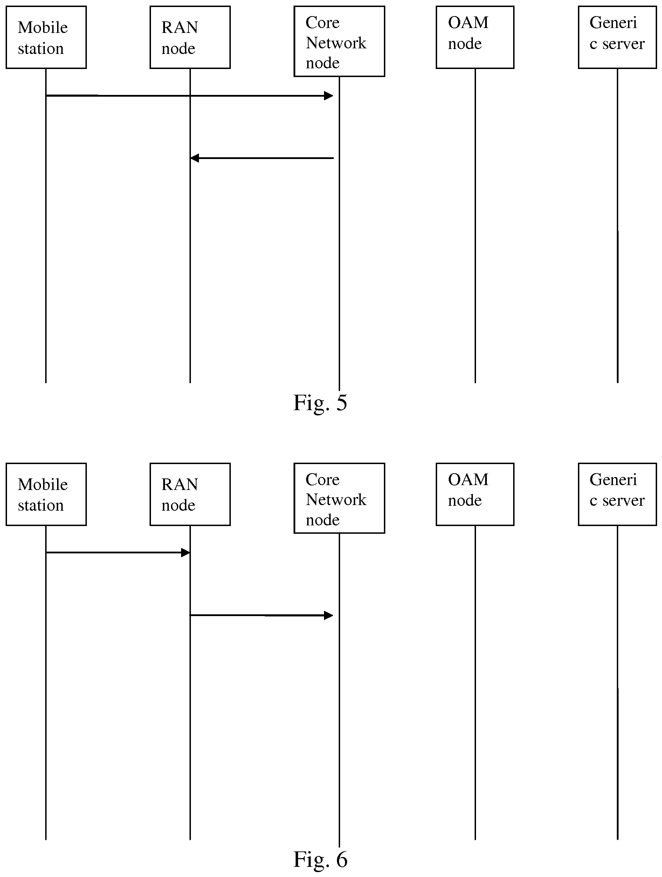

Figure 5 and 6 illustrates the propagation of the network energy saving information in the control plane. Preferably, the network control node is a radio access network (RAN) node and/or a core network node if the control plane is used for propagating the network energy saving information. The benefit of using the control plane is that the solution is contained within the standardised framework of the communication system, thereby not requiring the use of any external nodes or third party software.

The above mentioned figures illustrate possible embodiments for propagating the network energy saving information element in the network. Essentially, the network energy saving information is used to modify the behaviour in the base station of 3GPP systems, but the information may be refined/reduced in each node in the information flow.

Figure 3 and 4 shows example solutions using the user plane, where the UE connects to a generic server which may directly or indirectly connect to the Core Network node which forwards the information to the RAN node. The mobile station, in this case the UE, may connect by using a web client or a specific application running on the UE and connects to a server which may be located anywhere so as to be accessible from the communication network. The server forwards the network energy saving information back to the communication network, e.g. through an OAM entity. According to an embodiment, the core network stores the user specific network energy information in a specific register and provides this to the involved RAN node when a call is set-up.

Figure 5 and 6 shows example solutions for the control plane signalling, in which the UE informs the base station or core network node which in turn propagates the information to the core network node and the RAN node, respectively. In these examples, the RAN node may for example be any of the following: eNB, NB, base station, BSC, RNC; the Core Network node may for example be any of the following: MSC, MME, HSS, VLR. According to an embodiment, the UE informs the RAN node which uses the information to configure energy saving mode of operation for a specific UE. The RAN node may also inform the core network node, which can store the UE specific information and re-use this information in case a second call is established after a first call has been terminated.

Generally, the network control node is any of: Operations Administration and Maintenance (OAM) entity, a base station, a Base Station Controller (BSC), a Radio Network Controller (RNC), a Mobility Management Entity (MME), a Mobile Switching Centre (MSC), a GPRS Support Node (GSN), a Home Location Register (HLR), a Visitor Location Register (VLR), or a Home Subscriber Server (HSS). It should however be noted that the information may be propagated to the network control node via one or more intermediate communication nodes in the system.

Regarding preferred or accepted network energy saving modes these may relate to whether the mobile station accepts to participate in network energy saving or not. This embodiment provides a simple chose for the end user, i.e. to take part or not in energy saving.

Furthermore, the network energy saving mode may relate to how much the mobile station would like to contribute to network energy saving, which preferably is given in CO₂, energy, or time in energy saving mode. This can be stated in a scale or percentage or any other suitable representation.

The above embodiments could encourage the end user to contribute to even more energy saving, since the energy saving. To the end user the energy saving can hopefully be a competition for increased energy saving. For example, by providing suitable software (e.g. Apps provided by the operator) the network energy saving can be turned into gaming experiences which will increases the end users willingness to save energy. The end users energy saving performance over time (days, weeks, months, etc) can be monitored and compared with the end user's earlier performance and/or compared with other end user in different subscriber groups, e.g. company, school, members of address book, etc. Interactive updating of energy saving performance could also be displayed in the mobile stations. Awards and prices can also be given to "best performers".

Moreover, the network energy saving modes may further relate to different service aspects such as:
- minimum quality of service (QoS) levels, e.g. indicating delay and/or data rate;
- minimum bit rates;
- minimum supported services, such as voice services and data services.

The network energy saving modes may also relate to different transmission technologies such as:
- discontinuous reception (DRX);
- discontinuous transmission (DTX);
- antenna transmission techniques, such as MIMO
- radio access techniques technologies (RATs), such as 2G, 3G and 4G;
- base station sector switching;
- multi-hop transmissions.

The idea of base station sector switching is that the base station switches between different modes of operation, for example where a number of cells handled by the same base station (sectors) are modified into becoming a single cell (omni) with a similar overage area as provided by the above mentioned sectors.

Multi hop transmissions is a general term, where the information is not directly transmitted between the mobile station and the base station, but is instead forwarded by intermediate nodes, such as relay stations or other mobile stations. In one special implementation, the intermediate node is allowed to store the data for a certain time and may choose to forward the information at a point in time when transmitting the information is relatively more beneficial. This could for example be applied by a mobile relay station that moves and choose to transmit when it is in close vicinity of a base station.

The transmission technologies and the service aspects are related. Modifying the service aspects can be achieved by modifying the transmission techniques, and vice versa. The benefit of controlling the service aspects are that this directly maps to tend user quality of service, while the benefit of controlling the transmission technologies is that this directly maps to the mode of operation of the communication network.

It should be noted that other service aspects and transmission technologies can be used with the invention.

Furthermore, the inventors have also recognised that the network energy saving information may be derived from a first list of capabilities for a mobile station. This list of capabilities is currently used by mobile stations to inform the network about the capabilities for the mobile station. Therefore, the content of this list may be modified to limit the capabilities of the mobile station and thereby enable network energy saving in the network.

According to another embodiment, the mobile station transmits a second list of capabilities. The second list of capabilities indicates network energy saving preferences expressed as reduced capabilities compared with the capabilities in the first list. Hence, the second list of capabilities is be used for network energy saving. Also, since the first list is not modified, the network will still have full flexibility to use all capabilities in each mobile station and only use the contents of the second list to determine suitable energy saving mode of operation in case desired by the communication network.

According to yet another embodiment of the invention, the mobile station comprises at least one input means arranged to be operable by an end user of the mobile station. The end user can therefore actively select preferred or accepted network energy saving modes by inputting its selection by using the input means. Examples of input means are mechanical push buttons or touch screens. However, voice controlled input means, or any other suitable input means can be used. Hence, according to this embodiment the method in the mobile station further comprises, before the step of transmitting the network energy saving information, the steps of: receiving an input signal from the input means operated by the end user, and using the input signal for selecting a preferred or an accepted network energy saving mode for the mobile station. The input signal can be seen as a representation of the end users selection in respect of preferred or accepted network energy saving mode.

Furthermore, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, the invention also relates to a corresponding mobile station device and to a corresponding network control node device. The skilled person realises that mentioned devices may be modified, mutatis mutandis, according all embodiments of respective corresponding method. The expression mobile station includes a wide range of different types of mobile stations, such as laptop computers with communication abilities, tablets, smart phones or mobile phones.

Finally, it should be understood that the present invention is not limited to the embodiments described above, but also relates to and incorporates all embodiments within the scope of the appended independent claims.

## Claims

1. A method in a mobile station for transmitting information, said mobile station being arranged for communication in a wireless communication system comprising at least one communication network, at least one network control node and one or more mobile stations, wherein said network control node is configured to control network energy saving in said communication network based on at least one network energy saving information received from said mobile station, wherein the method comprises the step of:
- transmitting said at least one network energy saving information to said at least one network control node using the user plane of said wireless communication system via a server, wherein said at least one network energy saving information indicates a preferred or an accepted network energy saving mode for said mobile station, wherein said preferred or accepted network energy saving mode relates to:
- whether said mobile station accepts to participate in network energy saving or not; and/or
- how much said mobile station would like to contribute to network energy saving.

2. The method according to claim 1, wherein said preferred or accepted network energy saving mode relates to one or more service aspects in the group comprising:
- minimum quality of service, QoS, levels;
- minimum bit rates; and
- minimum supported services.

3. The method according to claim 1, wherein said at least one network energy saving information is a first list of capabilities for said mobile station, said first list of capabilities having at least one capability that is reduced compared to an actual capability for said mobile station.

4. The method according to claim 1, wherein said at least one network energy saving information is a second list of capabilities for said mobile station, said second list of capabilities indicating network energy saving preferences expressed as reduced capabilities compared with the capabilities in an actual capability for said mobile station.

5. A method in a network control node for controlling network energy saving in a wireless communication system, said network control node being arranged for controlling network energy saving in a wireless communication system comprising at least one communication network, at least one network control node and one or more mobile stations, wherein the method comprises the steps of:
- receiving at least one network energy saving information from said one or more mobile stations using the user plane of said wireless communication system via a server, wherein said at least one network energy saving information indicates a preferred or an accepted network energy saving mode for said one or more mobile stations, wherein said preferred or accepted network energy saving mode relates to:
- whether said one or more mobile stations accept to participate in network energy saving or not; and/or
- how much said one or more mobile stations would like to contribute to network energy saving; and
- controlling network energy saving in said at least one communication network based on said at least one network energy saving information from said mobile station.

6. The method according to claim 5, further comprising the step of:
- forwarding said at least one network energy saving information to another network control node in connection with a change of a serving cell for said mobile station.

7. The method according to claim 5, wherein said at least one network energy saving information is received from said mobile station via one or more intermediate network nodes.

8. A computer program, comprising code means, which when run by processing means causes said processing means to execute said method according to any of claims 1-7.

9. A computer program product comprising a computer readable medium and a computer program according to claim 8, wherein said computer program is included in the computer readable medium.

10. A mobile station device arranged for communication in a wireless communication system comprising at least one communication network, at least one network control node device and one or more mobile station devices, **characterised in that** further being arranged to perform the method in any of claims 1 to 4.

11. A network control node device arranged for controlling network energy saving in a wireless communication system comprising at least one communication network, at least one network control node device and one or more mobile station devices, **characterised in that** further being arranged to perform the method in any of claims 5 to 7.

12. A wireless communication system comprising at least one communication network, at least one network control node and one or more mobile stations, the wireless communication system being **characterised by** the mobile station being a mobile station according to claim 10 and the network control node being a network control node according to claim 11.

## Patentansprüche

1. Verfahren in einer Mobilstation zum Senden von Informationen, wobei die Mobilstation zur Kommunikation in einem drahtlosen Kommunikationssystem umfassend wenigstens ein Kommunikationsnetz, wenigstens einen Netzsteuerknoten und eine oder mehrere Mobilstationen ausgebildet ist, wobei der Netzsteuerknoten zum Steuern des Netzenergiesparens im Kommunikationsnetz auf der Basis von wenigstens einer von der Mobilstation empfangenen Netzenergiesparinformation ausgebildet ist, wobei das Verfahren den Schritt umfasst zum:
- Senden der wenigstens einen Netzenergiesparinformation an den wenigstens einen Netzsteuerknoten unter Verwendung der Benutzerebene des drahtlosen Kommunikationssystems über einen Server, wobei die wenigstens eine Netzenergiesparinformation einen bevorzugten oder akzeptierten Netzenergiesparmodus für die Mobilstation angibt, wobei sich der bevorzugte oder akzeptierte Netzenergiesparmodus darauf bezieht:
- ob es die Mobilstation akzeptiert, sich am Netzenergiesparen zu beteiligen oder nicht; und/oder
- wie viel die Mobilstation zum Netzenergiesparen beitragen will.

2. Verfahren nach Anspruch 1, wobei sich der bevorzugte oder akzeptierte Netzenergiesparmodus auf einen oder mehrere Dienstaspekte in der Gruppe bezieht umfassend:
- "Quality-of-Service"-(QoS-)Mindestniveaus;
- Mindestbitraten; und
- mindestens unterstützte Dienste.

3. Verfahren nach Anspruch 1, wobei die wenigstens eine Netzenergiesparinformation eine erste Liste von Fähigkeiten für die Mobilstation ist, wobei die erste Liste von Fähigkeiten wenigstens eine Fähigkeit aufweist, die im Vergleich zu einer tatsächlichen Fähigkeit für die Mobilstation verringert ist.

4. Verfahren nach Anspruch 1, wobei die wenigstens eine Netzenergiesparinformation eine zweite Liste von Fähigkeiten für die Mobilstation ist, wobei die zweite Liste von Fähigkeiten Netzenergiesparpräferenzen ausgedrückt als verringerte Fähigkeiten im Vergleich zu den Fähigkeiten in einer tatsächlichen Fähigkeit für die Mobilstation angibt.

5. Verfahren in einem Netzsteuerknoten zum Steuern des Netzenergiesparens in einem drahtlosen Kommunikationsnetz, wobei der Netzsteuerknoten zum Steuern des Netzenergiesparens in einem drahtlosen Kommunikationssystem umfassend wenigstens ein Kommunikationsnetz, wenigstens einen Netzsteuerknoten und eine oder mehrere Mobilstationen ausgebildet ist, wobei das Verfahren die Schritte umfasst zum:
- Empfangen wenigstens einer Netzenergiesparinformation von der einen oder den mehreren Mobilstationen unter Verwendung der Benutzerebene des drahtlosen Kommunikationssystems über einen Server, wobei die wenigstens eine Netzenergiesparinformation einen bevorzugten oder akzeptierten Netzenergiesparmodus für die eine oder mehreren Mobilstationen angibt, wobei sich der bevorzugte oder akzeptierte Netzenergiesparmodus darauf bezieht:
- ob es die eine oder die mehreren Mobilstationen akzeptieren, sich am Netzenergiesparen zu beteiligen oder nicht; und/oder
- wie viel die eine oder mehreren Mobilstationen zum Netzenergiesparen beitragen wollen; und
- Steuern des Netzenergiesparens im wenigstens einen Kommunikationsnetz auf der Basis der wenigstens einen Netzenergiesparinformation von der Mobilstation.

6. Verfahren nach Anspruch 5, ferner umfassend den Schritt zum:
- Weiterleiten der wenigstens einen Netzenergiesparinformation an einen weiteren Netzsteuerknoten in Verbindung mit einer Änderung einer aktiven Zelle für die Mobilstation.

7. Verfahren nach Anspruch 5, wobei die wenigstens eine Netzenergiesparinformation von der Mobilstation über einen oder mehrere Zwischennetzknoten empfangen wird.

8. Computerprogramm umfassend Codemittel, das bei Ausführen durch Verarbeitungsmittel die Verarbeitungsmittel zum Ausführen des Verfahrens nach einem der Ansprüche 1-7 veranlasst.

9. Computerprogrammprodukt umfassend ein computerlesbares Medium und ein Computerprogramm nach Anspruch 8, wobei das Computerprogramm im computerlesbaren Medium enthalten ist.

10. Zur Kommunikation in einem drahtlosen Kommunikationssystem umfassend wenigstens ein Kommunikationsnetz, wenigstens eine Netzwerksteuerknoten-Vorrichtung und eine oder mehrere Mobilstationvorrichtungen ausgebildete Mobilstationvorrichtung, **dadurch gekennzeichnet, dass** sie ferner zum Ausführen des Verfahrens nach einem der Ansprüche 1 bis 4 ausgebildet ist.

11. Zum Steuern des Netzenergiesparens in einem drahtlosen Kommunikationssystem umfassend wenigstens ein Kommunikationsnetz, wenigstens eine Netzwerksteuerknoten-Vorrichtung und eine oder mehrere Mobilstationvorrichtungen ausgebildete Netzwerksteuerknoten-Vorrichtung ausgebildeter Netzsteuerknoten, **dadurch gekennzeichnet, dass** er ferner zum Ausführen des Verfahrens nach einem der Ansprüche 5 bis 7 ausgebildet ist.

12. Drahtloses Kommunikationssystem umfassend wenigstens ein Kommunikationsnetz, wenigstens einen Netzsteuerknoten und eine oder mehrere Mobilstationen, wobei das drahtlose Kommunikationssystem **dadurch gekennzeichnet ist, dass** die Mobilstation eine Mobilstation nach Anspruch 10 ist und der Netzsteuerknoten ein Netzsteuerknoten nach Anspruch 11 ist.

## Revendications

1. Procédé d'une station mobile pour la transmission d'informations, ladite station mobile étant conçue pour effectuer des communications dans un système de communication sans fil comprenant au moins un réseau de communication, au moins un noeud de commande de réseau et une ou plusieurs stations mobiles, ledit noeud de commande réseau étant configuré pour commander une économie d'énergie de réseau dans ledit réseau de communication en fonction d'au moins une information d'économie d'énergie de réseau reçue en provenance de ladite station mobile, le procédé comprenant l'étape de :
- transmission de ladite au moins une information d'économie d'énergie de réseau audit au moins un noeud de commande de réseau au moyen du plan utilisateur dudit système de communication sans fil via un serveur, ladite au moins une information d'économie d'énergie de réseau indiquant un mode d'économie d'énergie de réseau préféré ou accepté pour ladite station mobile, ledit mode d'économie d'énergie de réseau préféré ou accepté concernant :
- le fait que ladite station mobile accepte ou non de participer à l'économie d'énergie de réseau ; et/ou
- dans quelle mesure ladite station mobile voudrait contribuer à l'économie d'énergie de réseau.

2. Procédé selon la revendication 1, dans lequel ledit mode d'économie d'énergie de réseau préféré ou accepté concerne un ou plusieurs aspects de service du groupe comprenant :
- les niveaux minimums de qualité de service, QoS ;
- les débits binaires minimums ; et
- les services minimums supportés.

3. Procédé selon la revendication 1, dans lequel ladite au moins une information d'économie d'énergie de réseau est une première liste de capacités pour ladite station mobile, ladite première liste de capacités ayant au moins une capacité qui est réduite par comparaison à une capacité réelle pour ladite station mobile.

4. Procédé selon la revendication 1, dans lequel ladite au moins une information d'économie d'énergie de réseau est une deuxième liste de capacités pour ladite station mobile, ladite deuxième liste de capacités indiquant des préférences d'économie d'énergie de réseau exprimées sous la forme de capacités réduites par comparaison aux capacités dans une capacité réelle pour ladite station mobile.

5. Procédé d'un noeud de commande de réseau pour commander une économie d'énergie de réseau dans un système de communication sans fil, ledit noeud de commande de réseau étant conçu pour commander une économie d'énergie de réseau dans un système de communication sans fil comprenant au moins un réseau de communication, au moins un noeud de commande de réseau et une ou plusieurs stations mobiles, ledit procédé comprenant les étapes de :
- réception d'au moins une information d'économie d'énergie de réseau en provenance desdites une ou plusieurs stations mobiles au moyen du plan utilisateur dudit système de communication sans fil via un serveur, ladite au moins une information d'économie d'énergie de réseau indiquant un mode d'économie d'énergie de réseau préféré ou accepté pour lesdites une ou plusieurs stations mobiles, ledit mode d'économie d'énergie de réseau préféré ou accepté concernant :
- le fait que lesdites une ou plusieurs stations mobiles acceptent ou non de participer à l'économie d'énergie de réseau ; et/ou
- dans quelle mesure lesdites une ou plusieurs stations mobiles voudraient contribuer à l'économie d'énergie de réseau ; et
- la commande de l'économie d'énergie de réseau sur ledit au moins un réseau de communication en fonction de ladite au moins une information d'économie d'énergie de réseau provenant de ladite station mobile.

6. Procédé selon la revendication 5, comprenant en outre l'étape de :
- transfert de ladite au moins une information d'économie d'énergie de réseau à un autre noeud de commande de réseau en lien avec un changement de cellule de desserte pour ladite station mobile.

7. Procédé selon la revendication 5, dans lequel ladite au moins une information d'économie d'énergie de réseau est reçue en provenance de ladite station mobile par l'intermédiaire d'un ou plusieurs noeuds de réseau intermédiaires.

8. Programme informatique, comprenant des moyens de code qui, lorsqu'ils sont exécutés par des moyens de traitement, font en sorte que lesdits moyens de traitement exécutent ledit procédé selon l'une quelconque des revendications 1 à 7.

9. Produit de programme informatique comprenant un support lisible par ordinateur et un programme informatique selon la revendication 8, dans lequel le programme informatique est inclus dans le support lisible par ordinateur.

10. Dispositif de station mobile conçu pour effectuer des communications dans un système de communication sans fil comprenant au moins un réseau de communication, au moins un dispositif de noeud de commande de réseau et un ou plusieurs dispositifs de station mobile, **caractérisé en ce qu'**il est en outre conçu pour exécuter le procédé selon l'une quelconque des revendications 1 à 4.

11. Dispositif de noeud de commande de réseau conçu pour commander une économie d'énergie de réseau dans un système de communication sans fil comprenant au moins un réseau de communication, au moins un dispositif de noeud de commande de réseau et un ou plusieurs dispositifs de station mobile, **caractérisé en ce qu'**il est en outre conçu pour exécuter le procédé selon l'une quelconque des revendications 5 à 7.

12. Système de communication sans fil comprenant au moins un réseau de communication, au moins un noeud de commande de réseau et une ou plusieurs stations de base, le système de communication sans fil étant **caractérisé en ce que** la station mobile est une station mobile selon la revendication 10 et le noeud de commande de réseau est un noeud de commande de réseau selon la revendication 11.
